# EUROPEAN PATENT APPLICATION

(11) **EP 1 043 380 A1**
(43) Date of publication of application: **11.10.2000**
(21) Application number: 98951753.7
(22) Date of filing: 10.11.1998
(51) Int. Cl.: C09K 3/18, B32B 7/00, B05D 5/00

(54) **WATER-REPELLENT COATING MATERIAL AND ARTICLE WITH WATER-REPELLENT SURFACE**

(30) Priority: 12.11.1997 JP 32714397; 13.11.1997 JP 32962297; 11.06.1998 US 88882 P
(71) Applicant: Showa Denko K K, Tokyo 105-8518 (JP)
(72) Inventor: NAKAMURA, Kasumi Central Research Laboratory,, Chiba-shi Chiba 267-0056 (JP); MONDEN, Ryuji Ohmachi Works, Showa Denko K.K., Ohmachi-shi Nagano 398-0002 (JP); INOUE, Chozo Central Research Laboratory,, Chiba-shi Chiba 267-0056 (JP); MIYASAKA, Yoshihiko Central Research Laboratory,, Chiba-shi Chiba 267-0056 (JP)
(74) Representative: Strehl Schübel-Hopf & Partner
(86) International application number: JP9805046
(87) International publication number: WO9924523

(57) **Abstract**

An article having a water-repellent surface layer, wherein said layer comprises a fine particle material which has an average primary particle diameter of 1-200 nm and is scarcely soluble or insoluble in water, preferably metal oxide fine particles whose surface is substantially fluorinated; a water-repellent paint containing the fine particle material for use in forming the water-repellent surface layer; and a method of imparting water-repellency to an article by applying the paint to an article or by applying a resin for covering to an article and then spraying the fine particles onto the resin before the resin solidifies.

## Description

This application claims a benefit of U. S. Provisional Application Serial No. 60/088,882 (filed June 11, 1998).

### TECHNICAL FIELD

The present invention relates to an article with water-repellent surface excellent water-repellency, snow-accretion resistance, waterproofing, corrosion resistance, weatherability, lubricity, etc., to a water-repellent paint used for forming the water-repellent surface, and to a method for imparting water-repellency to the surface of various articles.

### BACKGROUND ART

Paints that impart water-repellency to the surface of various articles have hitherto been developed for the purposes of preventing the snow accretion onto automobile bodies, traffic sign-boards, fans of heat exchange machines, electric wires and cables, antennas, and steel towers and of preventing the formation of stains caused by rain streaks on civil engineering machinery, portable electric apparatuses and their cases, sink cabinets and related kitchen utensils, houses, roads, and bridge piers, etc.

For example, there have been known a chemical processing method (coating method) using a fluororesin or a silicone resin; a method for forming a complex-plating film containing polytetrafluoroethylene (hereinafter abbreviated PTFE) oligomer particles on metallic surfaces (Japanese Patent Application Laid-Open (*kokai*) No. 4-285199, EP 503872); a method for forming a water-repellent layer, by use of a fluorine-containing compound, on a cloth surface which has protrusions formed thereon (Japanese Patent Application Laid-Open (*kokai*) No. 4-343764); a water-repellent paint in which powdery PTFE (a low-molecular weight oligomer) is dispersed (Japanese Patent Application Laid-Open (*kokai*) No. 6-122838); a water-repellent paint in which fluorinated graphite or tetrafluoroethylene (hereinafter abbreviated TFE) oligomer particles having an average particle size of not less than 4 µm is dispersed (Japanese Patent Application Laid-Open (*kokai*) No. 7-26169); coated articles whose coating surfaces have been roughened to have a continuous concave-convex structure of an average roughness of 0.1-100 µm through dispersion of a powdery additive (Japanese Patent Application Laid-Open (*kokai*) No. 7-18209); solid bodies having water-repellent surfaces with a multi-stage concave-convex structure constituted by a concave-convex structure of a large pitch and that of a short pitch cycle in their surfaces (Japanese Patent Application Laid-Open (*kokai*) No. 7-197017); and a liquid-repellency-imparting method in which a hydrophilic metallic surface having minute concave-convex structures is coated with a coupling agent comprising a water-repellent substance (Japanese Patent Application Laid-Open (*kokai*) No. 8-246163, WO 96/21523).

However, these coating methods making use of a fluororesin or a silicone resin provide poor water-repellency; for example, contact angle of water (standard for water-repellency) on the formed coating films is as low as 100-110° and insufficient. As has been widely documented, PTFE is insoluble in a solvent, limiting its usability as a painting material.

A complex-plating method making use of a PTFE dispersion system can provide a coating film having excellent water-repellency; however, the contact angle is largely affected by the molecular weight of PTFE and working steps of plating are necessitated.

Meanwhile, the method for applying a fluoro compound onto a cloth surface having protrusions which have been formed by dispersing inorganic fine particles, must include intricate production steps for fine texture of the cloth.

The generally employed method for coating the paint in which expensive TFE oligomer powder is dispersed has a disadvantage in that practical application thereof is limited in view of the cost.

The method for preventing stain caused by rain drops streaks in which continuous concave-convex shapes having an average surface roughness of 0.1-100 µm are formed by adding, to a resin, a powdery additive such as fluorocarbon may be satisfactory for preventing stain caused by rain drops streaks but it still needs to be improved in that the added fluorocarbon has a large average particle diameter of 0.2-200 µm, providing a surface with insufficient water-repellency.

Also, the method for imparting liquid-repellency through coating a hydrophilic metallic surface having a minute concave-convex structure with a coupling agent comprising a water-repellent substance may exhibit excellent water-repellency but it still suffers limitations that an expensive coupling agent has to be used to provide excellent water-repellency and that a metal surface of the substrate must be processed in advance to have a minute concave-convex structure.

Thus, the methods conventionally known in the art, which require use of expensive materials and works for processing a substrate surface to have a concave-convex shape, have problems in that they not only involve not simple a working process for imparting water-repellency but also they are insufficient in characteristics required for industrial applications such as water-repellency, snow-accretion resistance, waterproofing, corrosion resistance, weatherability, lubricity, etc.

Therefore, an object of the present invention is to provide practical means for imparting one or more characteristics such as water-repellency, snow-accretion resistance, waterproofing, corrosion resistance, weatherability, and lubricity without using expensive materials and by a simple method.

### DISCLOSURE OF THE INVENTION

As a result of intensive investigation, the present inventors have confirmed that coating an article with a water-repellent paint containing a fine particle material which has an average primary particle diameter of 1-200 nm and is scarcely soluble or insoluble in water or coating on a surface of an article with a covering resin and then spraying said fine particle material on the resin before it solidified will impart the article with water repellent properties and that use of metal oxide fine particles with substantially fluorinated surface as the fine particle material results in an increase in dispersibility, which is convenient for blending it in a paint as a water-repellent material, as well as in an increase in light resistance and in water repellency. The present invention has been accomplished based on this discovery.

That is, the present invention provides an article with water-repellent surface, a water-repellent paint and a method of imparting water-repellency to an article.
1. An article having a water-repellent surface layer, wherein the layer comprises a fine particle material which has an average primary particle diameter of 1-200 nm and is scarcely soluble or insoluble in water.
2. The article having a water-repellent surface layer as described in 1 above, wherein the fine particle material has a solubility product constant in water is 10⁻²⁵ or less.
3. The article having a water-repellent surface layer as described in 1 or 2 above, wherein the fine particle material contains at least one substance selected from metal oxides, non-oxide metal-based compounds, glasses, metal powder, fluorocarbon, carbon, graphite, fluororesin powder, silicone resin powder, polypropylene powder, polyethylene powder. organic pigments, and inorganic pigments.
4. The article having a water-repellent surface layer as described in 3 above, wherein the metal oxides are fine particles whose surface is substantially fluorinated.
5. The article having a water-repellent surface layer as described in 4 above, wherein the metal oxides whose surface is substantially fluorinated is obtained by fluorination treatment of a metal oxide containing at least one element selected from Be, B, Mg, Al, Si, Ca, Ti, V, Cr, Mn, Fe, Co, Cu, Zn, Ge, Zr, Ag, In, Sn, Pb, Sb, Ba, Ta, and Ce.
6. An article having a water-repellent surface layer formed by coating a paint containing a fine particle material as described in any one of 1 to 5 above.
7. The article having a water-repellent surface layer as described in 6 above, wherein the water-repellent surface layer is formed by coating a paint which contains said fine particle material in an amount of 5-95 wt% based on the weight of a paint resin after vaporization of volatile components.
8. The article having a water-repellent surface layer as described in 6 or 7 above, wherein the paint contains as a paint resin at least one resin component selected from among acryl-urethane resins, fluororesins, acryl-silicone resins, urethane resins, acrylic resins, epoxy resins, polyester resins, alkyd resins, melamine resins, urea resins, guanamine resins, polyvinyl chloride, polyvinyl acetate, vinyl butyral resins, styrene-butadiene resins, chlorinated rubber, unsaturated polyester resins, silicone resins, and cashew resins.
9. An article having a water-repellent surface layer, wherein the water-repellent surface layer is formed by coating a resin for covering to a surface of a substrate and then spraying metal oxide particles whose surface is substantially fluorinated as described in 4 or 5 above before said resin solidifies.
10. The article having a water-repellent surface layer as described in any one of 1 to 9 above, wherein the article is selected from metal substrates, glass substrates, fiber and texture substrates, ceramic substrates, wood articles, plastic substrates, and wall construction materials.
11. A water-repellent paint comprising a fine particle material having an average primary particle diameter of 1-200 nm in an amount of 5-95 wt% based on the weight of a paint resin after vaporization of volatile components.
12. The water-repellent paint as described in 11 above, wherein the fine particle material has a solubility product constant in water is 10⁻²⁵ or less.
13. The water-repellent paint as described in 11 or 12 above, wherein the fine particle material contains at least one substance selected from metal oxides, non-oxide metal-based materials, glasses, metal powder, fluorocarbon, carbon, graphite, fluororesin powder, silicone resin powder, polypropylene powder, polyethylene powder, organic pigments, and inorganic pigments.
14. The water-repellent paint as described in 13 above, wherein the metal oxides are fine particles whose surface is substantially fluorinated.
15. The water-repellent paint as described in 14 above, wherein the metal oxides whose surface is substantially fluorinated is obtained by fluorination treatment of a metal oxide containing at least one element selected from Be, B, Mg, Al, Si, Ca, Ti, V, Cr, Mn, Fe, Co, Cu, Zn, Ge, Zr, Ag, In, Sn, Pb, Sb, Ba, Ta, and Ce.
16. The water-repellent paint as described in any one of 11 to 15 above, wherein the paint contains as a paint resin at least one resin component selected from among acryl-urethane resins, fluororesins, acryl-silicone resins, urethane resins, acrylic resins, epoxy resins, polyester resins, alkyd resins, melamine resins, urea resins, guanamine resins, polyvinyl chloride, polyvinyl acetate, vinyl butyral resins, styrene-butadiene resins, chlorinated rubber, unsaturated polyester resins, silicone resins, and cashew resins.
17. A method of imparting water-repellency to an article, comprising the step of applying a water-repellent paint as described in any one of 11 to 16 above to an article.
18. A method of imparting water-repellency to an article, comprising the step of applying a resin for covering to a surface of a substrate and then spraying metal oxide particles whose surface is substantially fluorinated as described in 4 or 5 above before said resin solidifies.
19. The method of imparting water-repellency to an article as described in 17 or 18 above, wherein the article is selected from metal substrates, glass substrates, fiber and texture substrates, ceramic substrates, wood articles, plastic substrates, and wall construction materials.

### BRIEF DESCRIPTION OF THE DRAWINGS

FIG. 1 is a photograph of the surface of a coating film as observed by scanning electron microscopy in Example 4 of the present invention (SEM profile, x 50,000).
FIG. 2 is a photograph of the surface of a coating film as observed by atomic force microscopy in Example 4 (AFM profile).
FIG. 3 is a photograph of the surface of a coating film as observed by scanning electron microscopy in Example 11 of the present invention (SEM profile, x 50,000).
FIG. 4 is a photograph of the surface of a coating film as observed by scanning electron microscopy in Example 11 of the present invention (SEM profile, x 20,000).
FIG. 5 is a photograph of the surface of a coating film as observed by atomic force microscopy in Comparative Example 1 (AFM profile).

### DETAILED DESCRIPTION OF THE INVENTION

The fine particle material having an average primary particle diameter of 1-200 nm used in the present invention may be any material as far as it is scarcely soluble or insoluble in water having a solubility product constant of 10⁻²⁵ or less.

The fine particle material may be any substance as far as it contains at least one material selected from, for example, metal oxides, non-oxide metal-based materials, glasses, minerals, metal powder, fluorocarbon, carbon, graphite, fluoro-resin powder, silicone resin powder, polypropylene powder, polyethylene powder, organic pigments, and inorganic pigments.

Specific examples of the metal oxides and non-oxide metal-based materials include compounds comprising at least one element selected from Be, B, Mg, Al, Si, Ca, Ti, V, Cr, Mn, Fe, Co, Cu, Zn, Ge, Zr, Ag, In, Sn, Pb, Sb, Ba, Ta, and Ce. More specifically, examples of the metal oxide include BeO, B₂O₃, MgO, Al₂O₃, SiO₂, SiO, Ca₃(PO₄)₂, CaO₂, TiO, Ti₂O₃, TiO₂, V₂O₅, CrO, Cr₂O₃, MnO, Mn₂O₃, MnO₂, Mn₃O₄, Fe₂O₃, Fe₃O₄, CoO, Co₃O₄, Cu₂O, CuO, ZnO, GeO₂, ZrO₂, Ag₂O, InO, In₂O₃, SnO, SnO₂, Pb₃O₄, PbO₂, PbO, SbO₂, Sb₂O₃, Sb₂O₅, BaTiO₃, TaO₂, Ta₂O₅, CeO₂, CaTiO₃, and FeTiO₃.

Examples of the non-oxide metal-based compounds include Cus, Cu(OH)₂, AgCl, AgBr, AgI, AgS, Mg(OH)₂, MgCO₃, CaCO₃, BaCO₃, Zn(OH)₂, ZnS, ZnCO₃, CdS, Al(OH)₃, Sn(OH)₂, SnS, SnS₂, PbS, PbCl₂, PbSO₃, PbCO₃, Sb₂S₃, and FeS.

Preferred examples of the metal in the metal powder include gold, silver, bronze (alloy of copper and zinc), and aluminum. Specific examples of the organic pigment include azo pigment, phthalocyanine blue, color lakes, isoindolinone, quinacridone, perinone, perylene, watching red, quinacridone red, dioxazine violet, etc.

Specific examples of the inorganic pigment include in addition to the above-described compound pigments such as titanium white, 2PbCO₃·Pb(OH)₂ (lead white), ZnS+BaSO₄ (lithopone), K₃[Co(NO₂)₆] (aureoline), CoO-ZnO (cobalt green), 2(Co,Mg)O·SnO₂ (cerulean blue), (Co,Mg)O·Al₂O₃, 3CoO·P₂O₅ (cobalt violet), K[Fe^{II}Fe^{III}(CN)₆] (indigo blue), Na₆Al₆Si₆O₂₄S₄ (Prussian blue), Cu(CH₃CO₂)₂·3CuO(AsO₂)₂, ultramarine etc.

Preferred examples of these include metal oxides containing at least one element selected from among titanium, aluminum, silicon, silver, copper, zirconium, zinc, tin, germanium, and tantalum. No particular limitation is imposed on the crystallinity of the fine particles. For example, in the case of metal oxides, they are not limited to particular forms but may be amorphous, crystalline, or polycrystalline. Likewise, titanium oxide may be of any of one of the known forms, i.e., it may be amorphous, anatase, brookite, or rutile; and aluminum oxide may be of any one of the known types, such as α-alumina or γ-alumina.

Generally, the surface of metal oxides and other substances is usually covered with hydroxyl groups on the outermost layer thereof so that the surface is hydrophilic. Accordingly, use of the above-described fine particles having small particle diameters would seem unsuitable for providing water-repellency property. It is surprising that in the present invention, the fine particles of hydrophilic substance (such as titanium dioxide, alumina, silica, etc.) having a particle diameter of 1-200 nm exhibit excellent water-repellency (contact angle of about 150°). In the present invention, the term "water-repellent surface" has the same meaning as the definition used in general technical field, i.e., the surface condition under which the surface of a material contacts water at a contact angle of 110° or more.

Of the metal oxide fine particles used in the present invention, use of those whose surface is substantially fluorinated is particularly preferred since they are well dispersed when blended in a paint as a water-repellent material and they exist in high concentrations on the surface after coating and drying, making the surface excellent in weatherability and water-repellency.

Here, the term "substantially" as used in the phrase "metal oxide particles whose surface is substantially fluorinated" refers to metal oxide particles whose functional groups on the surface are partially or completely fluorinated, with the entirety of the metal oxide particles (bulk) not having to be fluorinated to a ratio of 100%. Also, the fluorination is not necessarily performed uniformly. For example, in the case of titanium dioxide particles, the fluorination can be carried out such that the atomic ratio of F/Ti in titanium dioxide fluorinated under specific conditions at a depth of approximately 10 nm is only 0.1-2.0, as confirmed by XPS (X-ray photoelectron spectroscopy) analysis.

According to the present invention, the metal oxide particles whose surface is substantially fluorinated (hereinafter referred to as fluorinated metal oxide particles) are highly dispersible in resins so that the primary particles are well dispersed in the surface layer of the coating, thus providing a paint excellent in stability with time and in quality of the finished surface of the coating. On the contrary, non-fluorinated metal oxide particles tend to form secondary particles and, hence, are limited in painting operation because of the stability of paint (cohesiveness). Therefore, in the present invention, it is preferred to use paints containing fluorinated metal oxides.

Generally, the dispersibility of fine particles is closely related to surface free energy of the powdery material and the surface free energy is related to adsorbability, lubricity, wettability and other physical properties of the surface of a solid (Biryushi Handobukku shi, published on September 5, 1990 by Fuji Techno System Co., Ltd., ed. by Shinroku Saito). Therefore, it is important to take into consideration the surface free energy of fine particles when their utilization is contemplated.

Since the surface of non-fluorinated metal oxide particles is normally covered with hydroxyl groups (OH groups), there have been available only those having high hydrophilicity (low water-repellency). In a preferred embodiment of the present invention, conventional metal oxides particles, whose surface layer is microscopically covered with hydroxyl groups, can be substantially fluorinated, to thereby make the surface of the particles more hydrophobic and to decrease the surface free energy of the particles so that the fluorinated metal oxide particles come to gather on the surface of the resin while it solidifies. This improves weatherability and increases the water-repellency of the coated surface remarkably.

The fine particles having an average primary particle diameter of 1-200 nm used in the present invention can be prepared by a method which is known *per se*.

In the case of metal oxides, for example, there can be cited a production method involving hydrolysis of a metal alkoxide in an organic solvent (Japanese Patent Application Laid-Open (*kokai*) No. 61-266308), a production method involving hydrolysis of an organic metal compound (Japanese Patent Application Laid-Open (*kokai*) No. 1-230407), a method in which an aqueous solution of inorganic acid is added to solution of an organic titanium compound and water-miscible organic solvent to cause hydrolysis to produce rutile type titanium oxide (Japanese Patent Application Laid-Open (*kokai*) No. 6-305730).

With regard to the method for producing fluorinated metal oxide particles which are used in the present invention, there may be employed a method for involving treatment with fluorine gas described in an earlier patent application (EP849337) filed by the present applicant; a method for employing a sodium fluoride-added suspension slurry described in Japanese Patent Application Laid-Open (*kokai*) No. 59-184263; and a method making use of contact with a freon gas described in Japanese Patent Application Laid-Open (*kokai*) No. 3-40919. No particular limitation is imposed on the fluorination treatment usable in the present invention.

Furthermore, research on a cross-section of a coating film of the water-repellent paint containing a fluorinated metal oxide particles which are used in the present invention confirmed that the fluorinated metal oxide particles exist in a greater concentration toward the surface layer than inside the coating film. Accordingly, use of fluorinated metal oxide particles allows forming on the surface of an article a minute concave-convex structure of the fluorinated metal oxide particles having water-repellency or liquid-repellency in a simple manner. In the present specification, the term "minute concave-convex structure" refers to a concave-convex structure having irregular concavities and convexities of approximately 1 nm or more and less than approximately 100 nm in the depth and the plane direction, and includes a surface concave-convex structure comprising larger concavities-convexities irregularly produced by mutual adhesion between a resin and the fluorinated metal oxide particles. The coating surface has a water-repellent characteristic of 110° or more, as measured in a contact angle test. The minute concave-convex structures formed with spatial irregularity are of such an order that they are reflected in the shape and particle diameter of fluorinated metal oxide particles.

The fine particles, which are used in the present invention, have a specific surface area of 0.01 m²/g or more, preferably 3-300 m²/g (BET method).

The fine particles used in the present invention have an effective average primary particle diameter of 1 nm or more and less than 200 nm, preferably 1 nm or more and less than 100 nm. The shape of the particles is not limited.

The resin component of the coating composition used in the water-repellent paint of the present invention comprises at least one resin selected from among acryl-urethane resins, fluororesins, acryl-silicone resins, urethane resins, acrylic resins, epoxy resins, polyester resins, alkyd resins, melamine resins, urea resins, guanamine resins, polyvinyl chloride, polyvinyl acetate, vinyl butyral resins, styrene-butadiene resins, chlorinated rubber, unsaturated polyester resins, silicone resins, and cashew resins. When fluorination is performed, it is preferred to use a resin having high and long-term weatherability so as not to cause falling of surface fluorinated fine particles. In particular, solvent-soluble fluororesins, vinylidene fluoride resins, acryl-silicone resins, polyester resins, and acryl-urethane resins are preferred. Incorporation of a fluoroalcohol or a fluoro (meth)acrylate oligomer into the resin component in a coating composition is also effective for increasing water-repellency of the resin component *per se*.

The fine particles are incorporated into a coating composition in an amount of 5-95 wt%, preferably 30-90 wt%, more preferably 50-90 wt% based on the weight of the resin after vaporization of volatile components. Similarly to the case of customary methods for dispersing a pigment, the fine particles are preferably incorporated upon blending of a paint, to which a dispersion stabilizer may optionally be added. Alternatively, the fine particles may be incorporated at a work site before application, and may be used in a paste form as needed. The method for using the paint containing fluorinated fine particles may be practiced in accordance with a method of applying a general coating material.

In the present invention, in addition to the method of imparting water-repellency to an article by coating a coating composition (paint) containing the fine particles, there may be used a second embodiment, in which after a resin for covering is coated and before the resin solidifies completely, the fine particles are sprayed on the resin surface to have the fine particles uniformly adhered and impregnated on the surface of the coating and the remaining fine particles that non-adhered after the solidification of the resin are removed by air blow, etc. to allow the fine articles to substantially be fixed to the surface of an article, thereby imparting water-repellency to the surface of the article.

In the present invention, the amount of the metal oxide particles which can "substantially be fixed" to a surface layer is 5-95%, preferably 30-95%, as measured by use of, e.g., a scanning electron microscope equipped with an energy-dispersive spectrometer (SEM-EDX). In the present invention, the concave-convex structure of the surface of an article substrate before fixation of said metal oxide particles on the substrate is essentially unlimited.

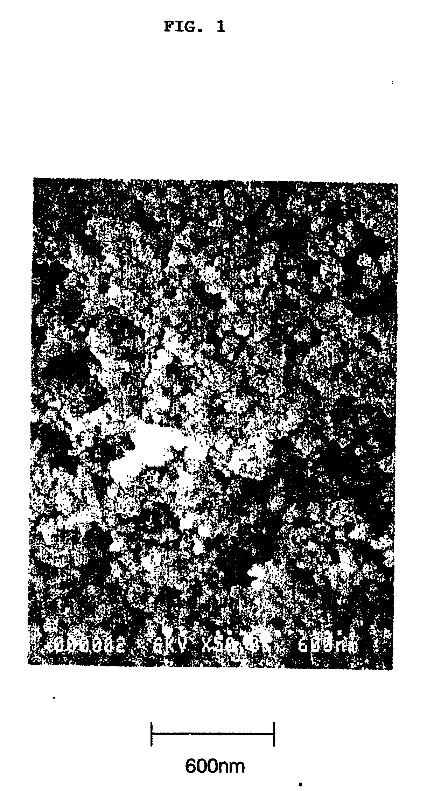

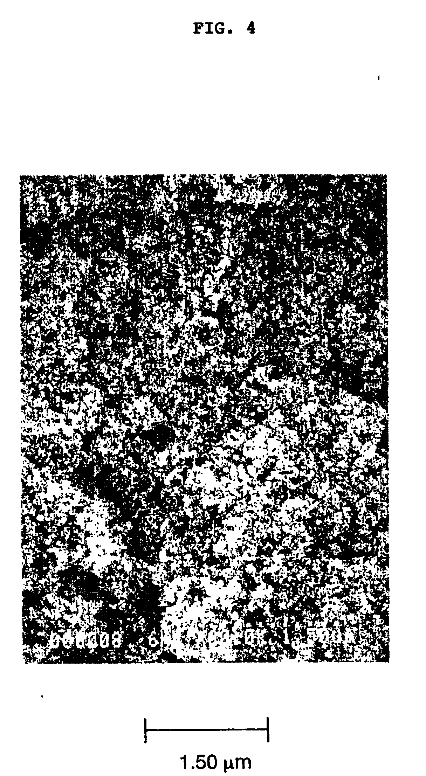

Next, the concave-convex structure of the surface of an article coated with the water-repellent paint of the present invention will be described. As can be seen in a photograph by the scanning electron microscopy (SEM profile) in the examples, the surface of an article coated with the water-repellent paint of the present invention has a complicated concave-convex structure. The SEM photographs (Figs. 1, 3 and 4) indicate that the minute concave-convex structure comprises irregular (non-periodical) concavities and convexities of approximately 1 nm or more and less than approximately 100 nm in at least the depth and the plane direction. The minute concave-convex structure is formed by mutual spatial fixation of the fine particles having an average primary particle diameter of essentially 1 nm or more and less than 200 nm, preferably 1 nm or more and less than 100 nm, through a paint resin. The feature of the structure is in that the above-described concave-convex structures exist irregularly in a population of uncountable numbers per square micron arranged. However, this structure differs from the multi-step concave-convex structure described in Japanese Patent Application Laid-Open (*kokai*) No. 7-197017 or from the ratio of formation of protrusions (5-30 protrusions per µm²) described in Japanese Patent Application Laid-Open (*kokai*) No. 4-343764. Further, the additive used in the present invention comprises the fine particles having a particle diameter much smaller than the particle system having a particle diameter of 200 nm - 200 µm described in Japanese Patent Application Laid-Open (*kokai*) No. 7-18209, resulting in that not only their dispersibility in resins is increased greatly but also their water-repellent characteristic is increased drastically.

The water-repellent paint containing the above-described fine particles of the present invention is not limited to a paint to be used for coating the surface of an article of which accretion of water is expected but it is also effective as a liquid-repellent paint which increases contact angle against an alcohol, an oil, or a liquid containing a surfactant.

In the present invention, the concave-convex structure on the surface of an article substrate on which a water-repellent surface layer containing the fine particles is to be provided is not limited particularly; the water-repellency is created by the minute concave-convex structure formed by the fine particles fixed to the surface of an article.

Specific examples of the article substrate which is to be coated with the water-repellent paint containing the fine particles of the present invention or which is to be coated with a resin for covering and sprayed the fine particle thereon before the resin solidifies include metal substrates, light metal substrates, glass substrates, fiber and texture substrates, ceramic substrates, wood articles, plastic substrates, and wall construction materials.

### BEST MODE FOR CARRYING OUT THE INVENTION

The present invention will next be described by way of examples, which should in no way be construed as limiting the invention.

Surface states were analyzed by the following methods or means.
(1) Fluorine content in the surface was determined by X-ray photoelectron spectroscopy (XPS).
(2) Water-repellency of the coating film surface was evaluated by measuring contact angle to distillated water (10 µl) using a contact angle measuring apparatus (model CA-A, Kyowa Interface Science Co., Ltd.).
(3) The metal oxide particles were dispersed according to a customary method by adding glass beads No. 1 in a volume equivalent to that of the composition and dispersing them by use of a paint-shaker for 30 minutes.
(4) A concave-convex structure in terms of the surface state was analyzed by use of an atomic force microscope (AFM : NanoScope IIIa D-3000, Digital Instruments).
(5) An average primary particle diameter was measured using a laser diffraction dispersion particle size distribution measuring apparatus HORIBA LA-920 (Horiba Seisakusho Co., Ltd.).

### Reference Example: Production of fluorinated metal oxide particles

In a normal pressure gas flow reactor was charged with powdery titanium dioxide(F-6, product of Showa Titanium Co.; specific surface area: 55 m²/g, primary particle diameter: 20 nm), and calcined at 200°C for 1 hour under reduced pressure to effect pretreatment. After cooling down to 150°C, 20% fluorine gas diluted with nitrogen gas was fed to the reactor for 15 minutes to carry out fluorination. The surface-fluorinated titanium dioxide particles retained a specific surface are of 55 m²/g. Upon determination by XPS, the fluorine content was 12%.

Similarly, powdery aluminum oxide (alumina, Al₂O₃, product of Nihon Aerosil Co., specific surface area: 100 m²/g, primary particle diameter: 13 nm), and powdery silicon oxide (silica, #130, product of Nihon Aerosil Co., specific surface area: 130 m²/g, primary particle diameter: 16 nm) were surface-fluorinated. Properties of the powdery metal oxides are listed in Table 1.

**Table 1**

| Properties of Granular Metal Oxides Used | | | |
|---|---|---|---|
| | Specific surface area (m²/g) | Surface fluorine content (%) | Av. primary particle diameter (nm) |
| Titanium dioxide | 55 | 12 | 20 |
| Alumina | 100 | 46 | 13 |
| Silica | 130 | 4 | 16 |

### Example 1:

Alumina having an average primary particle diameter of 13 nm (Al₂O₃, product of Nihon Aerosil Co.) (7.1 g) was dispersed in a butyl acetate (80 g) solution in which a fluororesin (Lumiflon LF-200, solids content 60%, product of Asahi glass Co., Ltd.) (10 g) had been dissolved. A curing agent (N-3500, product of Sumitomo Bayer Urethane Co.) (1.1 g) was added to the dispersion, and the mixture was subsequently applied to a glass substrate by use of a bar coater. The formed coating film was then hardened at 80°C for one hour and the contact angle of the surface was measured. As a result, a high water-repellency as shown in Table 2 was obtained. After the hardening, the film thickness was approximately 20 µm.

### Example 2:

Alumina having an average primary particle diameter of 13 nm (the same as in Example 1) (28.4 g) was dispersed in a butyl acetate (100 g) solution in which a fluoro-resin (the same as in Example 1) (10 g) had been dissolved. A curing agent (the same as in Example 1) (1.1 g) was added to the dispersion, and the mixture was subsequently applied to a glass substrate by use of a bar coater. The formed coating film was then hardened at 80°C for one hour and the contact angle of the surface was measured. As a result, a high water-repellency as shown in Table 2 was obtained. After the hardening, the film thickness was approximately 20 µm.

### Example 3:

Silica having an average primary particle diameter of 16 nm (#130, product of Nihon Aerosil Co.) (1.2 g) was dispersed in a butyl acetate (12.5 g) solution in which a vinylidene fluoride resin (solids content 42%) (4.29 g) had been dissolved. The resultant solution was applied to a glass substrate by use of a bar coater and dried. The property data obtained by measuring contact angle of the surface are shown in Table 2. After the hardening, the formed coating film had a thickness of approximately 20 µm.

### Example 4:

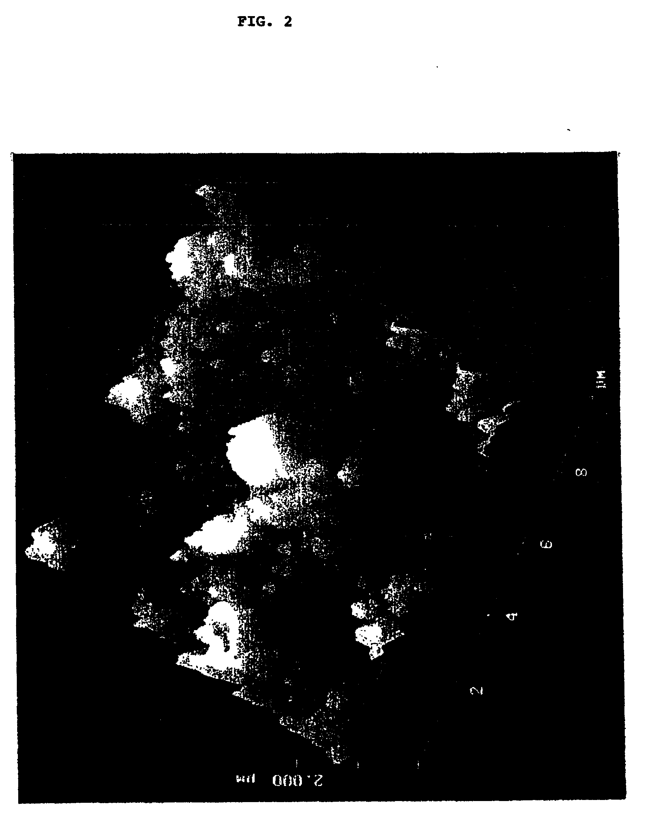

Silica having an average primary particle diameter of 16 nm (the same as in Example 3) (8.25 g) was dispersed in a butyl acetate (100 g) solution in which a vinylidene fluoride resin (solids content 42%) (10.5 g) had been dissolved. The resultant solution was applied to a glass substrate by use of a bar coater and dried. The property data obtained by measuring contact angle of the surface are shown in Table 2. After the hardening, the formed coating film had a thickness of approximately 20 µm. Water-repellency of the coating film fabricated in this example was particularly excellent and surface analysis by SEM and AFM were carried out; observation of the SEM figure (Fig. 1) revealed that the surface was covered by a structure in which an irregular ultra-fine concave-convex structure having a primary particle diameter equivalent of approximately 16 nm and observation of the AFM figure ( Fig. 2) revealed an irregular concave-convex structure in the direction of height.

### Example 5:

A coating film of about 20 µm thick was formed in the same manner and dosage as in Example 1 except that the alumina was replaced by titanium dioxide having an average primary diameter of 20 nm (F-6, product of Showa Titanium Co., Ltd.). The contact angle shown in Table 2 was obtained.

### Example 6:

A coating film of about 20 µm thick was formed in the same manner and dosage as in Example 2 except that the alumina was replaced by titanium dioxide(the same as in Example 5) (28.4 g). The contact angle shown in Table 2 was obtained.

### Example 7:

A coating film of about 20 µm thick was formed in the same manner and dosage as in Example 1 except that the alumina was replaced by carbon black having an average primary diameter of 15 nm (#2300, product of Mitsubishi Chemical Co., Ltd.) (7.1 g). The contact angle shown in Table 2 was obtained.

### Example 8:

A coating film of about 20 µm thick was formed in the same manner and dosage as in Example 2 except that the alumina was replaced by carbon black having an average primary diameter of 15 nm (#2300, product of Mitsubishi Chemical Co., Ltd.) (28.4 g). The contact angle shown in Table 2 was obtained.

### Comparative Example 1:

The following coating film serving as an example of the film containing no fine particle was produced for comparison.

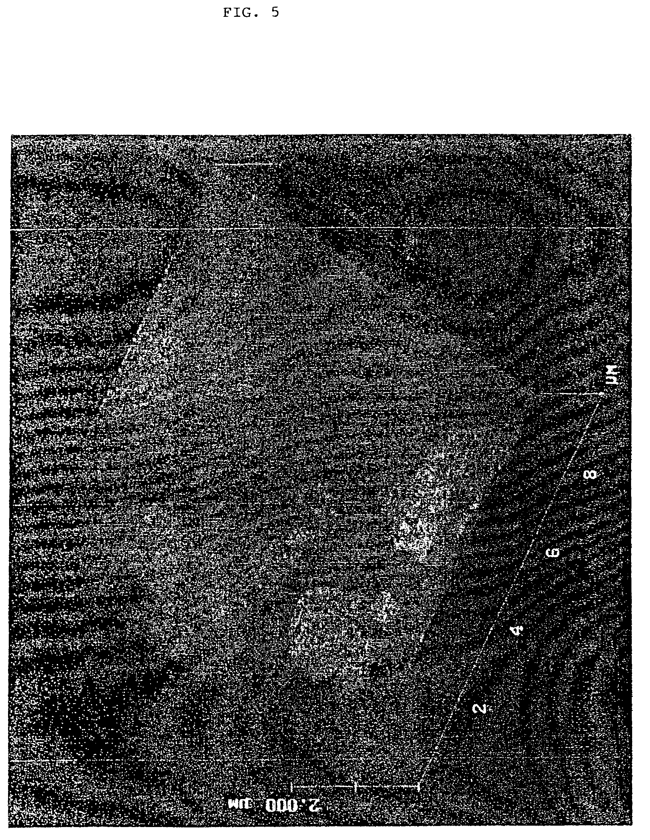

A curing agent isocyanate (N-3500) (0.55 g) was added to 2g of an ethyl acetate solution in which a fluoro-resin (Lumiflon LF-200, solids content 60%, product of Asahi glass Co., Ltd.) (10 g) had been dissolved. The mixture was applied to a glass substrate by use of a bar coater, to prepare a coating film having a thickness of approximately 20 µm. The contact angle measurement revealed that the film had a contact angle of
90° and poor water-repellency. As shown in Fig. 5. no minute concave-convex structure was observed in the surface upon examination by use of an atomic force microscope (AFM).

### Comparative Example 2:

The procedure of Example 1 was performed except that the titanium dioxide having an average primary particle diameter of 20 nm as used in Example 1 was replaced by titanium dioxide having a corresponding particle diameter of 450 nm (G-2, product of Showa Titanium Co., Ltd.); other conditions (relative weight ratio, production method, etc.) remained the same as those described in Example 1. Measurement of contact angle of the surface after solidification provided the property data shown in Table 2. Water-repellency was low.

**Table 2**

| | Fine particle | Content (wt%) | Contact angle (°) |
|---|---|---|---|
| Example 1 | Alumina | 50 | 154 |
| Example 2 | Alumina | 80 | 158 |
| Example 3 | Silica | 40 | 136 |
| Example 4 | Silica | 65 | 152 |
| Example 5 | Titanium dioxide | 50 | 142 |
| Example 6 | Titanium dioxide | 80 | 150 |
| Example 7 | Carbon black | 50 | 138 |
| Example 8 | Carbon black | 80 | 152 |
| Comp. Ex. 1 | No additive | 0 | 90 |
| Comp. Ex. 2 | Titanium dioxide | 50 | 100 |

### Example 9:

Fluorinated titanium dioxide having an average primary particle diameter of 20 nm (7.1 g) obtained in Reference Example was dispersed in an ethyl acetate (50 g) solution in which a fluororesin (Lumiflon LF-200, solids content 60%, product of Asahi Glass Co., Ltd.) (10 g) had been dissolved. A curing agent (N-3500, product of Sumitomo Bayer Urethane Co.) (1.1 g) was added to the dispersion, and the mixture was subsequently applied to a glass substrate by use of a bar coater. The formed coating film had a thickness of approximately 20 µm, and was then hardened at 80°C for one hour. The property data obtained by measuring contact angle of the surface are shown in Table 3.

### Example 10:

Fluorinated titanium dioxide having an average primary particle diameter of 20 nm (28.4 g) obtained in Reference Example was dispersed in an ethyl acetate (60 g) solution in which a fluororesin (Lumiflon LF-200, solids content 60%, product of Asahi glass Co., Ltd.) (10 g) had been dissolved. A curing agent (N-3500, product of Sumitomo Bayer Urethane Co.) (1.1 g) was added to the dispersion, and the mixture was subsequently applied to a glass substrate by use of a bar coater. The formed coating film had a thickness of approximately 20 µm, and was then hardened at 80°C for one hour. The property data obtained by measuring contact angle of the surface are shown in Table 3.

### Example 11:

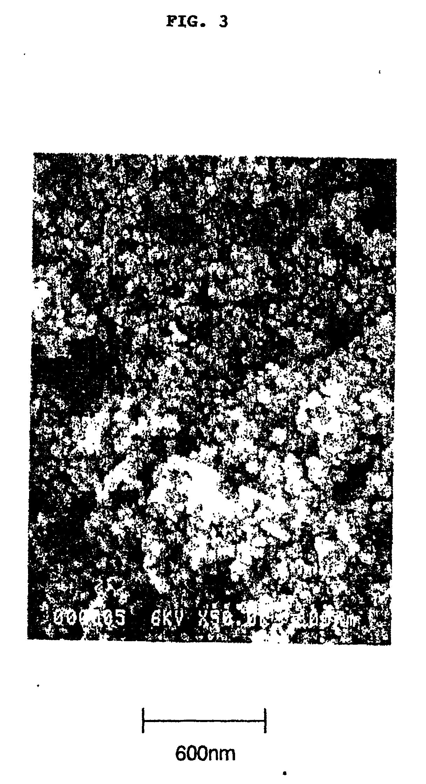

Fluorinated alumina having an average primary particle diameter of 13 nm (7.1 g) obtained in Reference Example was dispersed in a butyl acetate (180 g) solution in which a fluororesin (Lumiflon LF-200, solids content 60%, product of Asahi glass Co., Ltd.) (10 g) had been dissolved. A curing agent (N-3500, product of Sumitomo Bayer Urethane Co.) (1.1 g) was added to the dispersion, and the mixture was subsequently applied to a glass substrate by use of a bar coater. The formed coating film had a thickness of approximately 20 µm, and was then hardened at 80°C for one hour. Subsequently, contact angle of the surface was measured and the surface was investigated (SEM figure observation). As a result, there were obtained the property data shown in Table 3 and SEM photographs of Figs. 3 (x 50,000) and 4 (x 20,000).

Water-repellency of the coating film formed in this example is particularly excellent; observation of the SEM profile shown in Fig. 3 revealed that the surface was covered by a structure in which an irregular ultra-fine concave-convex structure having a primary particle diameter equivalent of approximately 20 nm and a large concave-convex structure of approximately 100 nm to approximately 500 nm are unevenly (aperiodically) distributed.

### Example 12:

Fluorinated alumina having an average primary particle diameter of 13 nm (28.4 g) obtained in Reference Example was dispersed in a butyl acetate (100 g) solution in which a fluororesin (Lumiflon LF-200, solids content 60%, product of Asahi glass Co., Ltd.) (10 g) had been dissolved. A curing agent (N-3500, product of Sumitomo Bayer Urethane Co.) (1.1 g) was added to the dispersion, and the mixture was subsequently applied to a glass substrate by use of a bar coater. The formed coating film had a thickness of approximately 20 µm, and was then hardened at 80°C for one hour. The property data obtained by measuring contact angle of the surface are shown in Table 3.

### Example 13:

Fluorinated silica having an average primary particle diameter of 16 nm (1.2 g) obtained in Reference Example was dispersed in a butyl acetate (12.5 g) solution in which a vinylidene fluoride resin (solids content 42%) (4.29 g) had been dissolved. The resultant solution was applied to a glass substrate by use of a bar coater and dried. The formed coating film had a thickness of approximately 20 µm. The property data obtained by measuring contact angle of the surface are shown in Table 3.

### Example 14:

Fluorinated silica having an average primary particle diameter of 16 nm (8.25 g) obtained in Reference Example was dispersed in a butyl acetate (100 g) solution in which a vinylidene fluoride resin (solids content 60%) (10.5 g) had been dissolved. The resultant solution was applied to a glass substrate by use of a bar coater and dried. The formed coating film had a thickness of approximately 20 µm. The property data obtained by measuring contact angle of the surface are shown in Table 3.

### Example 15:

A fluororesin (the same grade as described in Example 9, solids content 60%) (10 g) was diluted with ethyl acetate (50 g). A curing agent (N-3500, product of Sumitomo Bayer Urethane Co.) (1.1 g) was added thereto, and the mixture was applied to a glass substrate. Before curing occurs, fluorinated titanium dioxide powder having an average primary particle diameter of 20 nm was sprayed and dispersed so that the powder particles adhered to the surface. The coating film was hardened at 80 °C for one hour. The property data obtained by measuring contact angle of the surface are shown in Table 3.

### Example 16:

Titanium dioxide having an average primary particle diameter of 20 nm (the same grade as described in Example 5) (1 g) and butyl acetate (15 g) were charged in a mixing shaker and the same volume of glass beads No-1 were added thereto, followed by sufficient shaking for 2 hours using a paint shaker. The resulting liquid was coated on a substrate for observation by a scanning electron microscope (SEM) and the solvent was evaporated. SEM observation of the conditions of dispersion of titanium dioxide revealed that most of the primary particles agglomerated to form secondary particles comprising a plurality of the primary particles.

On the other hand, the same test piece as described above except that the titanium dioxide was replaced by the fluorinated titanium dioxide having the same particle diameter (20 nm) obtained in Reference Example. SEM observation of the test piece revealed that the most of the primary particles were in a dispersed state and confirmed that the dispersibility of the fluorinated titanium dioxide was very high.

### Example 17:

From a hallow extrusion molded outer wall material composed of high strength cement reinforced with fibrous material (Lambda, product of Showa Denko Kenzai Co., Ltd.) was cut out a test piece of 10 cm x 20 cm in size and 20 mm in thickness and chosen as a wall construction substrate. On the substrate was coated the water-repellent paint prepared in Example 14 by use of a brush and the coating was dried. The film thus formed had a thickness of approximately 40 µm. The property data obtained by measuring contact angle of the surface are shown in Table 3.

### Example 18:

A commercially available aluminum plate was chosen as a substrate, on which was coated the water-repellent paint prepared in Example 14 by use of a bar coater and the was dried. The film thus formed had a thickness of approximately 20 µm. The property data obtained by measuring contact angle of the surface are shown in Table 3.

**Table 3**

| | Metal oxide particle | Content (wt%) | Contact angle (°) |
|---|---|---|---|
| Example 9 | Fluorinated titanium dioxide | 50 | 124 |
| Example 10 | Fluorinated titanium dioxide | 80 | 132 |
| Example 11 | Fluorinated alumina | 50 | 151 |
| Example 12 | Fluorinated alumina | 80 | 135 |
| Example 13 | Fluorinated silica | 40 | 136 |
| Example 14 | Fluorinated silica | 56 | 138 |
| Example 15 | Fluorinated titanium dioxide | Fixed to surface layer | 140 |
| Example 17 | Fluorinated silica | 56 | 136 |
| Example 18 | Fluorinated silica | 56 | 137 |

### INDUSTRIAL APPLICABILITY

According to the present invention, water-repellency can be imparted to an article by providing a surface layer of a fine particle material comprising particles which have an average primary particle diameter of 1-200 nm and are sparingly soluble or insoluble in water, preferably metal oxide fine particles whose surface is substantially fluorinated.

According to the present invention, a covering surface having excellent water-repellency can be imparted in a simple manner so that a covered article superior to the conventional articles can be provided.

The surface layer containing metal oxide fine particles according to the present invention have besides water-repellency such effects as excellent snow-accretion resistance, waterproofing property, anticorrosion property, weatherability, and lubricity.

## Claims

1. An article having a water-repellent surface layer, wherein said layer comprises a fine particle material which has an average primary particle diameter of 1-200 nm and is scarcely soluble or insoluble in water.

2. The article having a water-repellent surface layer as claimed in claim 1, wherein said fine particle material has a solubility product constant in water is 10⁻²⁵ or less.

3. The article having a water-repellent surface layer as claimed in claim 1 or 2, wherein said fine particle material contains at least one substance selected from metal oxides, non-oxide metal-based compounds, glasses, metal powder, fluorocarbon, carbon, graphite, fluororesin powder, silicone resin powder, polypropylene powder, polyethylene powder, organic pigments, and inorganic pigments.

4. The article having a water-repellent surface layer as claimed in claim 3, wherein said metal oxides are fine particles whose surface is substantially fluorinated.

5. The article having a water-repellent surface layer as claimed in claim 4, wherein said metal oxides whose surface is substantially fluorinated is obtained by fluorination treatment of a metal oxide containing at least one element selected from Be, B, Mg, Al, Si, Ca, Ti, V, Cr, Mn, Fe, Co, Cu, Zn, Ge, Zr, Ag, In, Sn, Pb, Sb, Ba, Ta, and Ce.

6. An article having a water-repellent surface layer formed by coating a paint containing a fine particle material as claimed in any one of claims 1 to 5.

7. The article having a water-repellent surface layer as claimed in claim 6, wherein said water-repellent surface layer is formed by coating a paint which contains said fine particle material in an amount of 5-95 wt% based on the weight of a paint resin after vaporization of volatile components.

8. The article having a water-repellent surface layer as claimed in claim 6 or 7, wherein said paint contains as a paint resin at least one resin component selected from among acryl-urethane resins, fluororesins, acryl-silicone resins, urethane resins, acrylic resins, epoxy resins, polyester resins. alkyd resins, melamine resins, urea resins, guanamine resins, polyvinyl chloride, polyvinyl acetate, vinyl butyral resins, styrene-butadiene resins, chlorinated rubber, unsaturated polyester resins, silicone resins, and cashew resins

9. An article having a water-repellent surface layer, wherein said water-repellent surface layer is formed by coating a resin for covering to a surface of a substrate and then spraying metal oxide particles whose surface is substantially fluorinated as claimed in claim 4 or 5 before said resin solidifies.

10. The article having a water-repellent surface layer as claimed in any one of claims 1 to 9, wherein said article is selected from metal substrates, glass substrates, fiber and texture substrates, ceramic substrates, wood articles, plastic substrates, and wall construction materials.

11. A water-repellent paint comprising a fine particle material having an average primary particle diameter of 1-200 nm in an amount of 5-95 wt% based on the weight of a paint resin after vaporization of volatile components.

12. The water-repellent paint as claimed in claim 11, wherein said fine particle material has a solubility product constant in water is 10⁻²⁵ or less.

13. The water-repellent paint as claimed in claim 11 or 12, wherein said fine particle material contains at least one substance selected from metal oxides, non-oxide metal-based compounds, glasses, metal powder, fluorocarbon, carbon, graphite, fluororesin powder, silicone resin powder, polypropylene powder, polyethylene powder, organic pigments, and inorganic pigments.

14. The water-repellent paint as claimed in claim 13, wherein said metal oxides are fine particles whose surface is substantially fluorinated.

15. The water-repellent paint as claimed in claim 14, wherein said metal oxides whose surface is substantially fluorinated is obtained by fluorination treatment of a metal oxide containing at least one element selected from Be, B, Mg, Al, Si, Ca, Ti, V, Cr, Mn, Fe, Co, Cu, Zn, Ge, Zr, Ag, In, Sn, Pb, Sb, Ba, Ta, and Ce.

16. The water-repellent paint as claimed in any one of claims 11 to 15, wherein said paint contains as a paint resin at least one resin component selected from among acryl-urethane resins, fluororesins, acryl-silicone resins, urethane resins, acrylic resins, epoxy resins, polyester resins, alkyd resins, melamine resins, urea resins, guanamine resins, polyvinyl chloride, polyvinyl acetate, vinyl butyral resins, styrene-butadiene resins, chlorinated rubber, unsaturated polyester resins, silicone resins, and cashew resins.

17. A method of imparting water-repellency to an article, comprising the step of applying a water-repellent paint as claimed in any one of claim 11 to 16 to an article.

18. A method of imparting water-repellency to an article, comprising the step of applying a resin for covering to a surface of a substrate and then spraying metal oxide particles whose surface is substantially fluorinated as claimed in claim 4 or 5 before said resin solidifies.

19. The method of imparting water-repellency to an article as claimed in claim 17 or 18, wherein said article is selected from metal substrates, glass substrates, fiber and texture substrates, ceramic substrates, wood articles, plastic substrates, and wall construction materials.
